Europäisches Patentamt

**European Patent Office**

**Office européen des brevets**

(11) Numéro de publication: **0 150 645**
**B1**

# (12) FASCICULE DE BREVET EUROPEEN

(45) Date de publication du fascicule du brevet:
**13.05.87**

(51) Int. Cl.⁴: **C 06 C 5/00,** F 42 C 19/08,
F 42 D 1/04

(21) Numéro de dépôt: **84402598.1**

(22) Date de dépôt: **14.12.84**

(54) **Système d'amorçage d'un chargement explosif.**

(30) Priorité: **27.01.84 FR 8401247**

(43) Date de publication de la demande:
**07.08.85 Bulletin 85/32**

(45) Mention de la délivrance du brevet:
**13.05.87 Bulletin 87/20**

(84) Etats contractants désignés:
**DE FR GB IT**

(56) Documents cités:
**FR - A - 2 166 732**
**FR - A - 2 375 158**
**FR - A - 2 533 685**
**GB - A - 800 676**
**GB - A - 998 757**
**US - A - 3 893 395**

(73) Titulaire: **SOCIETE NATIONALE DES POUDRES ET EXPLOSIFS, 12, quai Henri IV, F-75181 Paris Cedex 04 (FR)**

(72) Inventeur: **Brignolle, Jean-Paul, Résidence du Parc 38 rue Bernard Palissy, F-77210 Avon (FR)**
Inventeur: **Cabrol, Jean-Claude, 9 rue des Jonquilles, F-91130 Ris Orangis (FR)**

## Description

La présente invention concerne un système d'amorçage à faible énergie d'un chargement explosif permettant la transmission de l'ordre de mise à feu de ce chargement. Il comprend un canal rempli d'explosif et un moyen d'amorçage fixé à une extrémité de ce canal, l'autre extrémité étant reliée au moyen ordonnant la mise à feu.

De tels systèmes sont utilisées dans le domaine civil (soudure par explosifs par exemple) et dans le domaine militaire (bombes et engins divers).

Le brevet américain 3 447 463 décrit un réseau d'amorçage d'un chargement explosif constitué par des canaux rectilignes remplis d'un explosif de faible énergie. Ces canaux sont reliés d'une part à un détonateur placé à l'extérieur de la charge et d'autre part à des moyens d'amorçage répartis à l'intérieur de la charge qui permettent d'amorcer cette charge simultanément en plusieurs points et de diriger ainsi l'onde de détonation dans des directions privilégiées prédéterminées.

L'inconvénient de cette réalisation est que les canaux précités présentent nécessairement un diamètre relativement important pour permettre l'introduction de l'explosif dans ces canaux et assurer la propagation de l'onde de détonation. Ces canaux occupent ainsi un volume relativement important de la charge explosive, de sorte qu'ils affectent l'efficacité du chargement. La réalisation de ces canaux est par ailleurs fort délicate.

Un article publié par la Demanderesse [ADERA, vol. 1 (1982), pages 272-289] décrit des réseaux de transmission d'ondes pyrotechniques miniaturisés, développés de façon à mettre à profit les qualités de certains explosifs composites, à savoir être injectables dans des tubes et fonctionner en très petits diamètres. Les ramifications nécessaires pour assurer la distribution des ordres peuvent ainsi être remplies d'explosif de manière continue et on s'affranchit ainsi des problèmes d'interface.

Il est également connu, lors de la réalisation d'un chargement explosif moulé ou contenu dans un conteneur, de positionner le réseau d'amorçage à l'intérieur du moule ou du conteneur au moyen d'un support extérieur maintenant par exemple l'élément principal du réseau. Cette façon d'opérer ne permet pas par exemple d'introduire le système d'amorçage dans une cavité dont le seul moyen d'acces est un tube de section de l'ordre de la section d'enveloppe dudit système d'amorçage.

La présente invention permet de remédier aux inconvénients précités tout en présentant d'autres avantages.

En effet, un système d'amorçage d'un chargement explosif selon l'invention, à faible énergie, est aisé à fabriquer et présente un encombrement très réduit.

Cet encombrement très réduit résulte d'une part de la miniaturisation du système d'amorçage dont le principe était déjà connu de l'homme de métier, mais aussi et d'autre part du fait qu'il n'est constitué que d'un seul élément tubulaire, ce qui n'a été rendu possible que grâce à la combinaison de cet élément tubulaire avec un nouveau moyen d'amorçage qui permet notamment un amorçage dans toutes les directions.

Cette combinaison assure une meilleure fiabilité du système d'amorçage en limitant les juxtapositions d'éléments et en assurant une parfaite continuité entre l'explosif contenu dans l'élément tubulaire et l'explosif du moyen d'amorçage. En effet, les moyens d'amorçage connus de l'homme de métier possèdent en général une structure rigide fixée à l'élément tubulaire par soudure, vissage, collage ou autre moyen équivalent et dans laquelle se trouve l'explosif d'amorçage. Il est également connu d'enrober l'extrémité de l'élément tubulaire par une charge relais d'amorçage mais dans ce cas la qualité de la jonction entre l'explosif contenu dans l'élément tubulaire et le relais d'amorçage est médiocre et cette charge relais n'a pas de tenue mécanique. Par ailleurs, ces moyens d'amorçage connus de l'homme de métier n'ont pas les propriétés mécaniques nécessaires pour maintenir un dispositif intégré permettant le positionnement du système d'amorçage lors de la réalisation du chargement explosif.

La Demanderesse a découvert que certains explosifs composites polymérisés pouvaient servir de moyen d'amorçage tout en étant pourvus d'un dispositif intégré permettant le positionnement du système d'amorçage lors de la réalisation du chargement explosif, même par des passages aussi étroits que la section d'enveloppe du système d'amorçage.

Un système d'amorçage d'un chargement explosif visé par l'invention permet la transmission de l'ordre de mise à feu de ce chargement; il comprend un canal rempli d'explosif et un moyen d'amorçage fixé à une extrémité de ce canal, l'autre extrémité étant reliée au moyen ordonnant la mise à feu.

Suivant l'invention, un tel système d'amorçage est caractérisé en ce qu'il est constitué:

— d'un canal formé par un élément tubulaire de section intérieure comprise entre 0,1 et 1 mm² réalisé en un matériau présentant une résistance mécanique supérieure à celle du plomb et résistant chimiquement aux explosifs utilisées, rempli par injection sous pression d'un explosif composite et ayant une épaisseur suffisante pour pouvoir supporter la pression d'injection de l'explosif composite;

— d'un moyen d'amorçage constitué d'un élément évasé, fixé à l'extrémité de l'élément tubulaire et surmoulé d'une masse en explosif composite polymérisé.

Le plomb présente une résistance mécanique insuffisante pour supporter la pression d'injection de l'explosif composite.

Le choix d'un matériau présentant une résistance mécanique supérieure à celle du plomb permet de réaliser un canal de section très faible et ainsi de réduire considérablement l'encombrement du système d'amorçage au sein de la charge explosive.

La section intérieure de l'élément tubulaire peut avoir une forme quelconque. Elle peut être par exemple circulaire, elliptique, polygonale, rectangulaire, carrée.

Selon une réalisation préférée, l'élément tubulaire est un cylindre de diamètre intérieur compris entre 0,3 et 0,8 mm.

L'élément tubulaire est en général métallique, mais un élément tubulaire en matière plastique suffisamment résistant mécaniquement et chimiquement aux explosifs utilisés peut également convenir. Peuvent également convenir des éléments tubulaires résultant de l'assemblage de plusieurs matériaux, par exemple un élément tubulaire métallique revêtu intérieurement d'une matière plastique, tel qu'un polymère fluoré.

De façon particulièrement préférée, l'élément tubulaire est en acier inoxydable, a un diamètre intérieur compris entre 0,4 et 0,7 mm et a un diamètre extérieur compris entre 0,55 et 2,7 mm.

L'acier inoxydable est choisi très résistant chimiquement et mécaniquement. Grâce à ce materiau, il est possible d'utiliser un élément tubulaire de faible diamètre.

De plus, l'acier inoxydable peut être facilement déformé notamment cintré de sorte qu'il est possible de réaliser un canal présentant des parties courbes, à faible rayon de courbure, adapté à la forme du chargement explosif, ou élargie ou rétreint pour modifier le phénomène explosif.

L'élément tubulaire est rempli d'explosif composite renfermant de préférence entre 73% et 82% en poids de pentrite pulvérulente et entre 27% et 18% en poids d'un liant organique.

De façon préférée, la pentrite présente une granulométrie comprise entre 1 et 7 μm.

De façon également préférée, le liant organique est choisi dans le groupe constitué par les polysiloxannes et les polyuréthannes.

L'élèment évasé du moyen d'amorçage est fixé, soudé par exemple, par sa parti la plus étroite à une extrémité de l'élément tubulaire. Il est en général constitué du même matériau que l'élément tubulaire. Lorsque l'élément tubulaire est cylindrique, cet élément évasé est de préférence tronconique.

L'intérieur de cet élément évasé est rempli du même explosif composite que celui contenu dans l'élément tubulaire, aucune discontinuité ne devant exister au sein de cet explosif.

Cet élément évasé est surmoulé d'une masse en explosif composite polymérisé. La composition de cet explosif composite peut être identique mais est en général différente de celle de l'explosif injecté dans le canal et l'élément évasé du moyen d'amorçage.

Pour asssurer au mieux sa fonction dans le moyen d'amorçage, l'explosif composite polymérisé précité doit être facilement amorçable, et doit posséder un bon pouvoir amorçatoire ainsi qu'un régime transitoire de détonation faible.

De tels explosifs composites sont par exemple constitués d'un liant polymérique tel que polyuréthanne, polysiloxanne ou polybutadiène chargé en pentrite et éventuellement, en plus de la pentrite, en une ou plusieurs autres charges renforçatrices en explosif secondaire, telle que l'octogène ou l'hexogène.

On utilise de façon préférée un explosif composite polymérisé renfermant de 10% à 80% en poids d'un liant polymérique et de 10% à 90% en poids d'une charge en explosifs secondaires contenant au moins de la pentrite.

L'explosif composite polymérisé peut également contenir divers additifs tels que des métaux et/ou des sels métalliques.

De façon particulièrement préférée on utilise un explosif composite polymérisé contenant 77% de pentrite et 23% d'un liant polyuréthanne.

Le volume de la masse en explosif composite polymérisé surmoulant l'élément évasé du moyen d'amorçage est au maximum de l'ordre de quelques cm$^3$.

Lorsqu'on veut réaliser un amorçage dans toutes les directions du chargement, la forme de cette masse est de préférence sphéroïdale avec un diamètre par exemple voisin de 20 mm.

La forme de cette masse est fonction des régions que l'on veut privilégier au sein du chargement explosif. On peut envisager selon les cas des formes cubiques, cylindrique, sphéroïdale à facettes, tronconique etc.

De façon générale, le système d'amorçage selon l'invention lors de son utilisation dans un chargement explosif, est au moins en partie noyé dans l'explosif constituant le chargement et n'a pas d'effets pyrotechniques et mécaniques latéraux sur ledit explosif (système d'amorçage de faible énergie). Par contre, le moyen d'amorçage tel que défini précédemment, dudit système d'amorçage, est totalement noyé dans l'explosif constituant le chargement.

Un chargement explosif initié par un système d'amorçage selon l'invention est de préférence:

— soit moulé, c'est-à-dire que le symbole d'amorçage est placé dans un moule puis que l'on coule dans ce dernier la charge explosive. Après polymérisation de cette charge, on démoule le chargement. C'est le cas par exemple de nombreuses compositions d'explosifs composites;

— soit contenu dans un conteneur, c'est-à-dire que la charge explosive est placée dans un conteneur dont elle épouse la forme intérieure, après positionnement du système d'amorçage dans ledit conteneur. Le système d'amorçage se trouve ainsi noyé dans la charge explosive. Le chargement explosif est alors utilisé sous cette forme, à savoir dans son conteneur.

L'explosif constituant le chargement peut être gazeux (mélanges carburant-comburant classiques par exemple), liquide (nitrométhane par exemple), solide pulvérulent (par exemple des nitratés ou des dynamites) ou sous forme de composition expolsive coulable identique à celles utilisée dans les chargements moulés, mais à la différence que dans ce sac le chargement n'est pas démoulé et reste contenu dans le moule qui joue alors le rôle de conteneur.

Lorsque le chargement initié par un système d'amorçage selon l'invention est de préférence soit moulé soit contenu dans un conteneur, ledit systeme d'amorçage comprend, de préférence, un dispositif intégré, fixé dans la masse en explosif composite polymérisé du moyen d'amorçage, permettant le positionnement du système dans le moule ou le conteneur servant à la réalisation du chargement explosif. Dans de nombreux cas (cavités par exemple), il n'est pas possible d'utiliser un support extérieur pour maintenir le système d'amorçage dans le moule ou le conteneur, d'où l'intérêt de cette variante.

Ce dispositif peut présenter de nombreuses formes et profils de réalisation: crochets, ailettes, méplats, tubes etc., présentant des cambrures et courbures diverses et variées (formes en U, S, spirale, etc.). Il peut être fixé à n'importe quel endroit dans la masse en explosif composite polymérisé.

Pour assurer sa fonction de positionnement du système d'amorçage dans le conteneur ou le moule servant à la réalisation du chargement explosif, le dispositif précité doit être en contact avec les parois dudit conteneur ou moule. Cette surface de contact peut être quelconque.

Ce dispositif doit également exercer une légère pression, par l'intermédiaire de cette surface de contact, sur les parois du conteneur ou du moule. Il doit donc être réalisé en un materiau présentant une certaine élasticité (métaux, matières polymériques, etc.). Dans certains cas, ce sont les parois du conteneur ou du moule qui exercent une légère pression sur le dispositif.

Il va de soi que les dimensions et notamment la longueur dudit dispositif sont fonction de la taille du conteneur ou du moule et de la position voulue du système d'amorçage dans le conteneur ou le moule.

Le nombre de crochets, ailettes, méplats, tubes, etc. peut être variable. Il est en général de 2, 3, 4 ou 5.

Dans le cas d'un changement explosif gazeux ou liquide, le dispositif intégré permet également le maintien du système d'amorçage. L'élément tubulaire peut être partiellement noyé dans un corps inerte pour rigidifier le système d'amorçage et/ou maintenir les propriétés mécaniques du système lors de la mise à feu. De tels corps inertes sont par exemple des matières expansées ou non: synthétiques, végétales, minérales, métalliques.

Le dispositif intégré précité est, de façon préférée, constitué d'ailettes très souples et élastiques, ce qui permet par exemple d'introduire le système d'amorçage dans une cavité dont le seul moyen d'accès est un tube de faible diamètre (20 à 30 mm par exemple). Les ailettes se replient au contact du tube lors de l'introduction puis se déploient dans la cavité, assurant ainsi le maintien du système d'amorçage par contact des ailettes avec les parois de la cavité. La longueur des ailettes est fonction du positionnement recherché. Les ailettes sont dans cette réalisation préférée, constiuées en un matériau métallique ou non ayant un coefficient d'élasticité au moins de l'ordre de 1%, par exemple, en acier Z2NKDT 18-10-7 selon norme française, de façon à ce qu'elles reprennent leur forme initiale après la flexion imposée lors du passage dans l'orifice de la cavité. De façon particulièrement préférée, ces ailettes ont deux cambrures et se présentent sous forme de crochets. Cette forme assure un excellent contact avec les parois du conteneur ou du moule et un bon maintien du système d'amorçage lorsque les ailettes sont dépliées et permet aux ailettes de se plier au maximum le long de la masse en explosif polymérisé lorsque le dispositif doit être introduit dans un passage étroit. Un positionnement du système d'amorçage particulièrement recherché est le centrage (par exemple sur l'axe du chargement). Dans ce cas les ailettes sont en général identiques et on utilise de façon préférée, trois ailettes formant entre elles un angle de 120 degrés.

Selon l'invention, les systèmes d'amorçage de chargements explosifs peuvent être réalisés en assemblant tout d'abord les divers éléments du système d'amorçage. Pour ce faire, on réalise pour commencer un élément tubulaire aux dimensions voulues par découpe dans un tube. On cintre éventuellement l'élément tubulaire pour obtenir des courbures. L'élément évasé du moyen d'amorçage est alors fixé par sa partie la plus étroite (de section voisine de celle de l'élément tubulaire) à une des extrémités de l'élément tubulaire par soudure par exemple.

On injecte ensuite, sous pression, un explosif composite à liant organique liquide dans l'ensemble réalisé précédemment. Pour cela, on fait tout d'abord le vide, puis, après avoir dégazé la composition explosive pour éviter toute bulle, on injecte l'explosif tel que de la pentrite en suspension dans un liant de préférence organique, tel que du polyuréthanne ou du polysiloxanne à l'état liquide.

Pour obtenir un remplissage parfait, il est essentiel que l'injection soit réalisée sous une très forte pression, comprise par exemple entre 400 et 1000 bars. L'élément évasé est ensuite surmoulé d'une masse en explosif composite. Pour ce faire, on place l'extrémité de l'élément tubulaire avec l'élément évasé du moyen d'amorçage dans un moule dont la forme intérieure est celle choisie pour la masse en explosif composite.

Lorsqu'un dispositif intégré de positionnement doit être fixé dans ladite masse, il est également mis en place dans le moule de façon à ce que la partie devant être noyée dans l'explosif composite soit dans la cavité du moule. On injecte ensuite dans le moule un explosif composite à l'état non réticulé sous une pression de quelques bars. On polymérise ensuite la composition, par exemple par effet thermique.

Après démoulage, pour réaliser le chargement explosif, le système d'amorçage est alors placé dans un moule dans le cas d'un chargement moulé ou dans un conteneur dans le cas d'un chargement contenu dans un conteneur. Le système d'amorçage peut être positionné de façon très précisé et reproductible grâce au dispositif intégré de positionnement. Il est ainsi possible de fabriquer, en grande série, des chargements identiques présentant des performances rigoureusement semblables.

Dans le cas d'un chargement moulé, on coule alors dans le moule la charge explosive. On démoule ensuite, après polymérisation. Dans le cas d'un chargement contenu dans un conteneur, on introduit alors la charge explosive dans le conteneur dont elle épouse la forme. Dans ce dernier cas, lorsqu'on introduit une charge explosive coulable telle que celle utilisées pour les chargements moulés, le chargement n'est prêt à l'emploi qu'après polymerisation de la composition.

Les systèmes d'amorçage selon l'invention peuvent être initiés par tout détonateur classique relié à l'extrémité de l'élément tubulaire opposée à celle où est placé le moyen d'amorçage décrit précédemment. Après excitation du détonateur, l'ordre de mise à feu est transmis au système d'amorçage. Le front de détonation progresse au sein de l'explosif contenu dans l'élément tubulaire puis dans l'élément évasé qui se trouve à son extrémité, sans initier la charge explosive dans laquelle est noyé le système d'amorçage, la faible quantité d'explosif ainsi que la nature du matériau et sa géométrie ne permettant pas une telle initiation latérale.

La masse en explosif composite polymérisé du moyen d'amorçage qui surmoule l'élément évasé est alors initiée, puis initie elle-même l'amorçage du chargement explosif dans des directions privilégiées en fonction de la forme donnée à ladite masse. Par exemple, dans le cas d'une sphère, on assure un amorçage dans toutes les directions du chargement explosif.

Les exemples non limitatifs suivants illustrent la description précédente.

La figure 1 représente, en coupe longitudinale, un système d'amorçage selon l'invention d'un chargement explosif.

La figure 2 représente ce même système en vue de dessus.

La figure 3 représente un chargement explosif contenu dans un conteneur et ayant le système d'amorçage présenté en figure 1 et 2.

*Exemple 1*

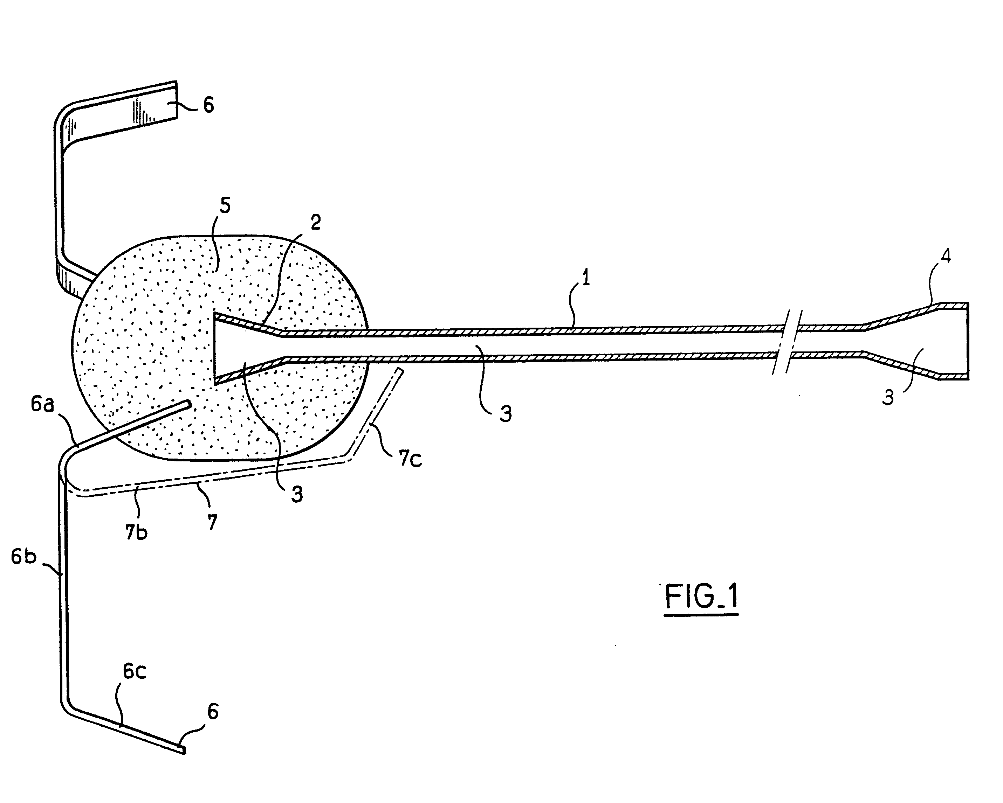

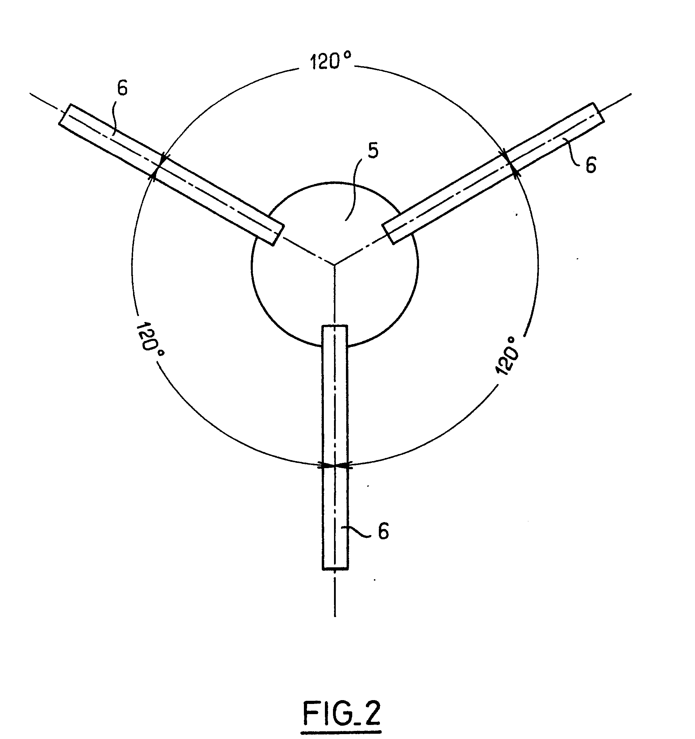

Selon la réalisation des figures 1 et 2, le système d'amorçage comprend un canal (1) formé par un élément tubulaire cylindrique, en acier inoxydable, découpé à la longueur voulue, soit 600 mm, dans un tube de diamètre intérieur 0,7 mm et de diamètre extérieur 1,2 mm.

L'element évasé (2) du moyen d'amorçage a été soudé par sa partie la plus étroite dont le diamètre est voisin de celui de l'élément tubulaire, à une extrémité de l'élément tubulaire. Un autre élément évasé (4) a été soudé de la même façon à l'autre extrémité de l'élément tubulaire pour assurer la liaison avec le détonateur.

On a ensuite injecté sous pression dans l'ensemble ainsi réalisé et mis sous vide, un explosif composite (3) à liant polyuréthanne liquide, préalablement dégazé, et comprenant 80% en poids de pentrite pulvérulente (granulométrie $\leqslant$ 5 μm) et 20% en poids de liant polyuréthanne. La masse volumique de cet explosif composite est égale à environ 1,5 g/cm$^3$ et sa vitesse de détonation de l'ordre de 7500 m/s. L'élément évasé (2) a ensuite été surmoulé d'une masse (5) en explosif composite polymérisé de composition 23% en poids de liant polyuréthanne et 77% en poids de pentrite.

Pour ce faire, on a placé l'extrémité de l'élément tubulaire avec l'élément évasé (2) du moyen d'amorçage dans un moule de forme intérieure sphéroïdale, de volume intérieur d'environ 4 cm$^3$. Trois ailettes (6) en acier vieilli Z2NKDT 18-10-7 selon norme française ont égalèement été placées dans le moule, chacune à 120 degrés de l'autre, et de façon à ce que la partie devant être noyée dans la partie supérieure de la masse (5) soit dans la cavité du moule.

Les 3 ailettes sont identiques et présentent 2 cambrures, ce qui leur configure une forme en crochet.

On a ensuite injecté dans le moule, sous une pression de 4 bars, la composition en explosif composite précitée, non polymérisée.

Après polymérisation par effet thermique, puis démoulage, on obtient le système d'amorçage. Sur la figure 1 les ailettes (6) sont représentées dépliées [traits pleins (6)] et pliées au maximum le long de la masse (5) [trait tiretés (7)].

En position dépliée, chaque ailette en forme de crochet présente 3 parties, (6a), (6b) et (6c). La partie (6a) est fixée sur approximativement la moitié de sa longueur dans la masse (5). La partie (6b) est perpendiculaire à l'axe de l'élément tubulaire et la partie (6c) a une longueur voisine de celle de la partie (6a). Les parties (6a) et (6c) forment un angle de 120 degrés environ avec la partie (6b).

En position pliée maximale (7), la position de la partie (6a) demeure pratiquement identique. La partie (6b) prend par contre une position (7b) tangentielle à la masse (5), la partie (6c) prenant la position (7c) où son extrémité libre parvient pratiquement au contact de l'élément tubulaire.

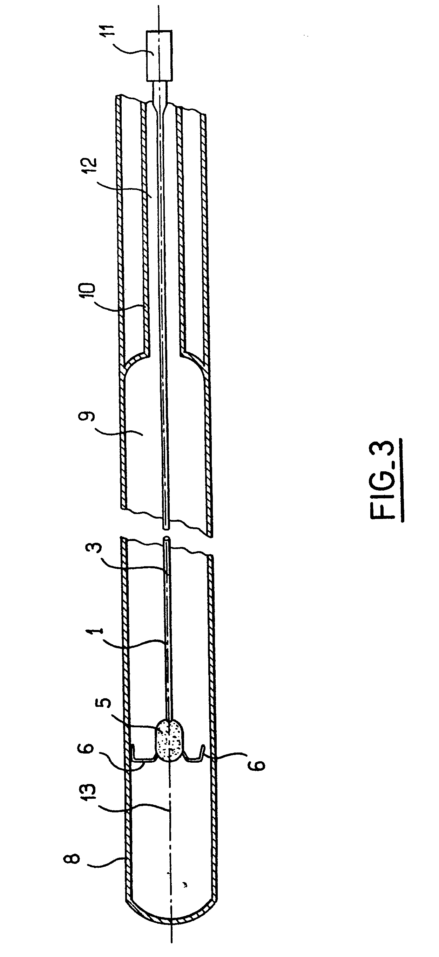

Le système d'amorçage ainsi réalisé a permis l'amorçage du chargement explosif schématisé figure 3. Il s'agit d'un chargement explosif contenu dans un conteneur métallique. Le conteneur se présente sous forme d'une cavité principale (9) cylindrique délimitée par les parois (8), de longueur environ 600 mm et de diamètre intérieur 60 mm environ communiquant avec une deuxième cavité cylindrique (12) ayant le même axe (13) que la cavité (9), mais ayant un diamètre intérieur moindre, de l'ordre de 25 mm, la longueur étant de 300 mm environ.

L'accès à la cavité (9) ne peut se faire que par la cavité (12). On a donc introduit le système d'amorçage dans la cavité (9) par passage dans la cavité (12). Au contact des parois (10) de la cavité (12), les ailettes (6) se sont pliées et positionnées dans une position voisine de celle présentée en (7) figure 1 et décrite précédemment. Le système coulisse ainsi le long des parois (10), le diamètre de la masse (5) étant légèrement inférieur au diamètre de la cavité (12), pour parvenir à la cavité (9). A ce moment les ailettes (7) se déplient, et entrent en contact avec les parois (8) de la cavité principale (9) au niveau de toute la surface de la partie (6c) des ailettes (se reférer figure 1). Le système, toujours situé dans l'axe (13) des cavités (9) et (12), coulisse ainsi jusqu'à la position désirée le long de cet axe (13). Les ailettes (6) permettent de maintenir et centrer parfaitement la masse (5) et l'élément tubulaire sur l'axe (13) des deux cavités (9) et (12).

On a alors rempli les cavités (9) et (12) d'un explosif composite coulable de composition pondérale classique:

| | |
|---|---|
| hexogène | 40% |
| Pb(NO$_3$)$_2$ | 48% |
| liant polybutadiène | 12% |

Après polymérisation de cet explosif et connexion d'un détonateur classique (11), on a fait détoner le chargement.

*Exemple 2*

Le système d'amorçage réalisé dans l'exemple 1 et schématisé figures 1 et 2 est placé au centre d'un moule cylindrique de diamètre intérieur 50 mm et de longueur 700 mm. Les ailettes (6) permettent le maintien et le centrage du système d'amorçage sur l'axe du moule. Le moule est ensuite rempli d'un explosif composite coulable de même composition que celui coulé dans les cavités (9) et (12) dans l'exemple 1. Après polymérisation, le chargement a été démoulé, puis mis en détonation après avoir connecté le système d'amorçage à un détonateur classique.

*Exemple 3*

On a réalisé et fait détoner un chargement explosif identique à celui de l'exemple 4 à la seule différente que le système d'amorçage ne contenait pas d'ailettes. Le positionnement du système d'amorçage à l'intérieur du moule a été réalisé au moyen d'un support extérieur maintenant l'élément tubulaire.

*Exemple 4*

On a réalisé et fait détoner un chargement explosif identique à celui de l'exemple 1 à la seule différence que les cavités (9) et (12) sont remplies d'une composition explosive solide pulvérulente dont la composition est la suivante:

— 82% de nitrate d'ammonium
— 12% de trinitrotoluène
— 6% de farine de bois.

Cette composition avait un CUP de 107, une vitesse de détonation de l'ordre de 4300 m/s et une densité de 1,05.

**Revendications:**

1. Système d'amorçage d'un chargement explosif permettant la transmission de l'ordre de mise à feu de ce chargement comprenant un canal (1) rempli d'explosif et un moyen d'amorçage fixé à une extrémité de ce canal (1), l'autre extrémité étant reliée au moyen ordonnant la mise à feu, caractérisé en ce qu'il est constitué:
— dudit canal (1) formé par un élément tubulaire de section intérieure comprise entre 0,1 et 1 mm² réalisé en un materiau présentant une résistance mécanique supérieure à celle de plomb et résistant chimiquement aux explosifs utilisés, rempli par injection sous pression d'un explosif composite (3) et ayant une épaisseur suffisante pour pouvoir supporter la pression d'injection de l'explosif composite;
— dudit moyen d'amorçage constitué d'un élément évasé (2) fixé à une extrémité de l'élément tubulaire et surmoulé d'une masse en explosif composite polymérisé (5).

2. Système d'amorçage d'un chargement explosif selon la revendication 1, caractérisé en ce qu'il comprend également un dispositif intégré fixé dans la masse en explosif composite polymérisé (5) du moyen d'amorçage, permettant le positionnement du système d'amorçage lors de la réalisation du chargement explosif.

3. Système d'amorçage d'un chargement explosif selon la revendication 1 ou 2, caractérisé en ce que l'élément tubulaire est un cylindre de diamètre intérieur compris entre 0,3 et 0,8 mm et en ce que élément évasé (2) du moyen d'amorçage fixé à une extrémité de l'élément tubulaire est tronconique.

4. Système d'amorçage d'un chargement explosif selon l'une quelconque des revendications 1 à 3, caractérisé en ce que l'élément tubulaire est en acier inoxydable, en ce qu'il a un diamètre intérieur compris entre 0,4 et 0,7 mm et en ce qu'il a un diamètre extérieur compris entre 0,55 et 2,7 mm.

5. Système d'amorçage d'un chargement explosif selon l'une quelconque des revendications 1 à 4, caractérisé en ce que la masse en explosif composite polymérisé (5) du moyen d'amorçage a une forme sphéroïdale.

6. Système d'amorçage d'un chargement explosif selon la revendication 2, caractérisé en ce que le dispositif intégré permettant le positionnement du système d'amorçage lors de la réalisation du chargement explosif est constitué d'ailettes (6).

7. Système d'amorçage d'un chargement explosif selon la revendication 6, caractérisé en ce que les ailettes (6) permettant le positionnement du système d'amorçage lors de la réalisation du chargement explosif ont deux cambrures et se présentent sous forme de crochets.

8. Système d'amorçage d'un chargement explosif selon la revendication 2 ou 6, caractérisé en ce que le dispositif intégré permettant le positionnement du système d'amorçage lors de la réalisation du chargement explosif permet le centrage dudit système d'amorçage.

9. Système d'amorçage d'un chargement explosif selon la revendication 8, caractérisé en ce que le dispositif intégré permettant le centrage du système d'amorçage est constitué de trois ailettes (6) formant entre elles un angle de 120 degrés.

10. Système d'amorçage d'un chargement explosif selon l'une quelconque des revendications 6, 7 et 9, caractérisé en ce que les ailettes (6) sont constituées d'un matériau ayant un coefficient d'élasticité au moins de l'ordre de 1%.

11. Système d'amorçage d'un chargement explosif selon l'une quelconque des revendications précédentes, caractérisé en ce que la composition d'explosif composite (3) injectée dans le canal renferme de 73% à 82% en poids de pentrite pulvérulente et de 27% à 18% en poids d'un liant organique.

12. Système d'amorçage d'un chargement explosif selon la revendication 11, caractérisé en ce que la pentrite pulvérulente présente une granulométrie comprise entre 1 et 7 µm.

13. Système d'amorçage d'un chargement explosif selon la revendication 11 ou 12, caractérisé en ce que le liant organique est choisi dans le groupe constitué par les polysiloxannes et les polyuréthannes.

14. Système d'amorçage d'un chargement explosif selon l'une quelconque des revendications précédentes caractérisé en ce que la masse en explosif composite polymérisé (5) du moyen d'amorçage renferme de 10% à 80% en poids d'un liant polymérique et de 10% à 90% en poids d'une charge en explosifs secondaires contenant au moins de la pentrite.

15. Système d'amorçage d'un chargement explosif selon la revendication 14, caractérisé en ce que le liant polymérique de la masse en explosif composite polymérisé (5) du moyen d'amorçage est choisi dans le groupe constitué par les polyuréthannes, les polysiloxannes et les polybutadiènes.

16. Système d'amorçage d'un chargement explosif selon la revendication 14, caractérisé en ce que la charge de la masse en explosif composite polymérisé (5) du moyen d'amorçage est uniquement de la pentrite.

17. Système d'amorçage d'un chargement explosif selon la revendication 14, caractérisé en ce que la masse en explosif composite polymérisé (5) du moyen d'amorçage renferme 23% en poids d'un liant polyuréthanne et 77% en poids de pentrite.

## Patentansprüche

1. Zündsystem für eine Sprengstoffladung, das die Übertragung des Zündbefehls der Ladung erlaubt mit einem Kanal (1), der mit Sprengstoff gefüllt ist und einem an einem Ende dieses Kanals (1) befestigten Zündorgan, wobei am anderen Ende ein Auslöser für den Zündbefehl befestigt ist, dadurch gekennzeichnet, dass das System besteht aus:
— dem Kanal (1), bestehend aus einem rohrförmigen Element mit einem Innenquerschnitt zwischen 0,1 und 1 mm$^2$, aus einem Material mit einer mechanischen Widerstandskraft grösser als der von Blei und chemisch resistent gegenüber den verwendeten Sprengstoffen, wobei der Kanal mittels einer Injektion unter Druck mit einem Kompositsprengstoff (3) gefüllt ist und eine ausreichende Dicke hat, um den Injektionsdruck des Kompositsprengstoffs auszuhalten und
— dem Zündorgan, das aus einem aufgeweiteten Element (2) besteht, das an einem Ende des rohrförmigen Elements angebracht und mit einer polymerisierten Masse aus dem Kompositsprengstoff vergossen ist.

2. Zündsystem für eine Sprengstoffladung nach Anspruch 1, gekennzeichnet durch eine integrierte Vorrichtung, die in der polymerisierten Kompositsprengstoffmasse (5) des Zündorgans angeordnet ist, die die Positionierung des Zündsystems während der Herstellung der Sprengstoffladung ermöglicht.

3. Zündsystem für eine Sprengstoffladung nach Anspruch 1 oder 2, dadurch gekennzeichnet, dass das rohrförmige Element ein Zylinder mit einem Innendurchmesser zwischen 0,3 und 0,8 mm ist und dadurch, dass das aufgeweitete Element (2) des an einem Ende des rohrförmigen Elements angebrachten Zündorgans kegelstumpfförmig ist.

4. Zündsystem für eine Sprengstoffladung nach einem der Ansprüche 1-3, dadurch gekennzeichnet, dass das rohrförmige Element aus nichtrostendem Stahl besteht und einen Innendurchmesser hat, der zwischen 0,4 und 0,7 mm liegt und einen Aussendurchmesser, der zwischen 0,55 und 2,7 mm liegt.

5. Zündsystem für eine Sprengstoffladung nach einem der Ansprüche 1-4, dadurch gekennzeichnet, dass die polymerisierte Kompositsprengstoffmasse des Zündorgans eine Kugelform hat.

6. Zündsystem für eine Sprengstoffladung nach Anspruch 2, dadurch gekennzeichnet, dass die integrierte Vorrichtung, die die Positionierung des Zündsystems während der Herstellung der Sprengstoffladung ermöglicht, aus Flügeln (6) besteht.

7. Zündsystem für eine Sprengstoffladung nach Anspruch 6, dadurch gekennzeichnet, dass die Flügel (6), die die Positionierung des Zündsystems während der Herstellung der Sprengstoffladung ermöglichen, zwei Wölbungen aufweisen, die sich in Form von Haken darstellen.

8. Zündsystem für eine Sprengstoffladung nach Anspruch 2 oder 6, dadurch gekennzeichnet, dass die integrierte Vorrichtung, die die Positionierung des Zündsystems während der Herstellung der Sprengstoffladung ermöglicht, die Zentrierung dieses Zündsystems ermöglicht.

9. Zündsystem für eine Sprengstoffladung nach Anspruch 8, dadurch gekennzeichnet, dass die integrierte Vorrichtung, die die Zentrierung des Zündsystems ermöglicht, aus drei Flügeln (6) besteht, die untereinander einen Winkel von 120° einschliessen.

10. Zündsystem für eine Sprengstoffladung nach einem der Ansprüche 6, 7 und 9, dadurch gekennzeichnet, dass die Flügel (6) aus einem Material bestehen, das einen Elastizitätskoeffizienten aufweist, der Grössenordnung von mindestens 1%.

11. Zündsystem für eine Explosivladung nach einem der vorstehend Ansprüche, dadurch gekennzeichnet, dass die Zusammensetzung des Kompositsprengstoffs (3), der in den Kanal eingespritzt ist, 73-82 Gewichtsprozent pulverisiertes Pentrit und 27-18 Gewichtsprozent eines organischen Bindemittels umfasst.

12. Zündsystem für eine Sprengstoffladung nach Anspruch 11, dadurch gekennzeichnet, dass das pulverisierte Pentrit eine Körnigkeit zwischen 1 und 7 Mikron aufweist.

13. Zündsystem für eine Sprengstoffladung nach Anspruch 11 oder 12, dadurch gekennzeichnet, dass das organische Lösungsmittel aus der Gruppe gewählt ist, die aus den Polysiloxanen und den Polyurethanen besteht.

14. Zündsystem für eine Sprengstoffladung nach einem der vorstehenden Ansprüche, dadurch gekennzeichnet, dass die polymerisierte Kompositsprengstoffmasse (5) des Zündorgans 10-80% eines polymerischen Bindemittels und 10-90 Gewichtsprozent einer Sekundärsprengstoffladung aufweist, die mindestens Pentrit enthält.

15. Zündsystem für eine Sprengstoffladung nach Anspruch 14, dadurch gekennzeichnet, dass das polymerische Bindemittel der polymerisierten Kompositsprengstoffmasse (5) des Zündorgans aus der Gruppe gewählt ist, die aus den Polyurethanen, den Polysiloxanen, den Polybutadienen besteht.

16. Zündsystem für eine Sprengstoffladung nach Anspruch 14, dadurch gekennzeichnet, dass die Ladung der polymerisierten Kompositsprengstoffmasse (5) des Zündorgans ausschliesslich aus Pentrit besteht.

17. Zündsystem für eine Sprengstoffladung nach Anspruch 14, dadurch gekennzeichnet, dass die Masse des polymerisierten Kompositsprengstoffs (5) des Zündorgans zu 23 Gewichtsprozent aus einem Bindemittel auf Polyurethanbasis und zu 77 Gewichtsprozent aus Pentrit besteht.

## Claims

1. Initiating system for an explosive charge permitting the order to ignite this charge to be transmitted, comprising a channel (1) filled with explosive and an initiating means fastened at one end of this channel (1), the other end being connected to the means ordering the ignition, characterized in that it consists:

— of the said channel (1) formed by a tubular member with an internal cross-section of between 0.1 and 1 mm², made of a material having a mechanical strength greater than that of lead and withstanding chemically the explosives employed, filled by injection of a compound explosive (3) under pressure and being of sufficient thickness to be capable of withstanding the injection pressure of the compound explosive, and

— of the said initiating means consisting of a flared member (2) fastened at one end of the tubular member and overmoulded with a mass of polymerized compound explosive (5).

2. Initiating system for an explosive charge according to Claim 1, characterized in that it also comprises an integrated device fastened in the mass of polymerized compound explosive (5) of the initiating means, enabling the initiating system to be positioned when the explosive charge is produced.

3. Initiating system for an explosive charge according to Claim 1 or 2, characterized in that the tubular member is a cylinder with an internal diameter of between 0.3 and 0.8 mm and in that the flared member (2) of the initiating means attached at one end of the tubular member is frustoconical.

4. Initiating system for an explosive charge according to any one of Claims 1 to 3, characterized in that the tubular member is made of stainless steel, in that it has an internal diameter of between 0.4 and 0.7 mm and in that it has an external diameter of between 0.55 and 2.7 mm.

5. Initiating system for an explosive charge according to any one of Claims 1 to 4, characterized in that the mass of polymerized compound explosive (5) of the initiating means is spheroidal in shape.

6. Initiating system for an explosive charge according to Claim 2, characterized in that the integrated device enabling the initiating system to be positioned when the explosive charge is produced consists of fins (6).

7. Initiating system for an explosive charge according to Claim 6, characterized in that the fins (6) enabling the initiating system to be positioned when the explosive charge is produced have two cambers and are hook-shaped.

8. Initiating system for an explosive charge according to Claim 2 or 6, characterized in that the integrated device enabling the initiating system to be positioned when the explosive charge is produced enables the said initiating system to be centred.

9. Initiating system for an explosive charge according to Claim 8, characterized in that the integrated device enabling the initiating system to be centred consists of three fins (6) forming an angle of 120 degrees between them.

10. Initiating system for an explosive charge according to any one of Claims 6, 7 and 9, characterized in that the fins (6) are made of a material which has a coefficient of elasticity of at least of the order of 1%.

11. Initiating system for an explosive charge according to any of the preceding claims, characterized in that the compound explosive composition (3) injected into the channel contains from 73% to 82% by weight of powdered pentrite and from 27% to 18% by weight of an organic binder.

12. Initiating system for an explosive charge according to Claim 11, characterized in that the powdered pentrite has a particle size of between 1 and 7 microns.

13. Initiating system for an explosive charge according to Claim 11 or 12, characterized in that the organic binder is chosen from the group consisting of polysiloxanes and polyurethanes.

14. Initiating system for an explosive charge according to any one of the preceding claims, characterized in that the mass of polymerized compound explosive (5) of the initiating means contains from 10% to 80% by weight of a polymeric binder and from 10% to 90% by weight of a charge consisting of secondary explosives containing at least pentrite.

15. Initiating system for an explosive charge according to Claim 14, characterized in that the polymeric binder of the mass of polymerized compound explosive (5) of the initiating means is chosen from the group consisting of polyurethanes, polysiloxanes and polybutadienes.

16. Initiating system for an explosive charge according to Claim 14, characterized in that the charge of the mass of polymerized compound explosive (5) of the initiating means consists solely of pentrite.

17. Initiating system for an explosive charge according to Claim 14, characterized in that the mass of polymerized compound explosive (5) of the initiating means contains 23% by weight of a polyurethane binder and 77% by weight of pentrite.

FIG.1

0 150 645

**FIG.2**

FIG_3